# EUROPÄISCHE PATENTANMELDUNG

(11) **EP 3 000 557 A1**
(43) Veröffentlichungstag der Anmeldung: **30.03.2016**
(21) Anmeldenummer: 15003145.8
(22) Anmeldetag: 24.10.2013
(51) Int. Cl.: B24B 21/16, B24B 5/36, B23Q 11/00

(54) **VORRICHTUNG ZUM KÜRZEN DER LAUFSCHAUFELN EINER STRÖMUNGSMASCHINE**

(62) Teilanmeldung aus: 13189998.1
(71) Anmelder: Siemens Aktiengesellschaft, 80333 München (DE)
(72) Erfinder: GENZ, Alexander, 10553 Berlin (DE); LIEDTKE, Samuel, 16515 Oranienburg (DE); LOHSE, Florian, 13595 Berlin (DE)

(57) **Zusammenfassung**

Die Erfindung betrifft ein Verfahren zum Kürzen einer oder mehrerer Laufschaufel(n) (2) einer Strömungsmaschine (3) durch Materialabtrag an der Schaufelspitze sowie Vorrichtungen (1; 19) zur Durchführung eines solchen Verfahrens, wobei zum Kürzen der Laufschaufeln (2) erfindungsgemäß eine Bandschleifvorrichtung (1; 19) eingesetzt wird und die geforderte Kegelkontur durch eine Rotationsbewegung der Schaufel am feststehenden Werkzeug entlang erzeugt wird.

## Beschreibung

Die vorliegende Erfindung betrifft eine Vorrichtung zum Kürzen der Laufschaufeln einer Strömungsmaschine durch Materialabtrag an der Schaufelspitze.

Schaufeln von Strömungsmaschinen, insbesondere Turbinenschaufeln, unterliegen während des Betriebs einer sehr hohen Materialbeanspruchung und einem entsprechend großen Verschleiß. Aus diesem Grund werden die Schaufeln im Rahmen von Wartungsarbeiten normalerweise nach einer vorbestimmten Betriebsdauer durch neue Schaufeln ersetzt. Die Betriebsdauer ist dabei vorteilhaft derart gewählt, dass sich die ausgetauschten Schaufeln noch reparieren lassen.

Werden die Schaufeln einer Turbine ausgetauscht, so werden die Turbinenlaufschaufeln, die Turbinenleitschaufeln und die Führungssegmente ersetzt. Um bei einem solchen Austausch die Aufrechterhaltung der ursprünglichen Turbinenleistung gewährleisten zu können, muss auch bei den neuen Turbinenlaufschaufeln das originäre radiale Schaufelspaltmaß eingestellt werden. Hierzu werden die Schaufelspitzen der neuen Laufschaufeln vor ihrer Montage entsprechend durch Materialabtrag an der Schaufelspitze gekürzt. Da das radiale Spaltmaß nicht nur von den Fertigungstoleranzen der neuen Laufschaufeln sondern auch von weiteren Einflussfaktoren abhängig ist, ergibt sich der endgültige radiale Schaufelspalt erst nach komplettem Tausch aller Schaufeln. Als Einflussfaktoren sind hier beispielsweise die Kontur der neuen Leitschaufeln, die Kontur der neuen Führungsringe, die Beschichtung der neuen Leitschaufeln und Führungsringe, die Veränderung der Position der neuen Schaufeln relativ zur Position der ersetzten alten Schaufeln, die Fertigungstoleranzen von Gehäuse, Radscheibennuten und dergleichen zu nennen. Das sich endgültig einstellende Spaltmaß ist im Vorfeld entsprechend schwer und nur innerhalb eines recht weiten Toleranzbandes kalkulierbar.

Die Kürzung der Schaufelspitzen von Laufschaufeln erfolgt normalerweise im Rahmen einer Schleifbearbeitung unter Verwendung einer Schleifscheibe.

Im Läuferneubau ist es bekannt, den gesamten beschaufelten Läufer in eine große Schleifmaschine einzuspannen, woraufhin die Schaufeln mit gerader Schleifscheibe vollautomatisch auf die geforderte Länge geschliffen werden.

Im Rahmen von Wartungsarbeiten ist es bekannt, den Läufer einer Strömungsmaschine in einem ersten Schritt zu entstapeln. In einem weiteren Schritt können dann die Radscheiben als Ganzes in eine Schleifvorrichtung eingespannt werden. An dieser ist ein Schnellläufer mit gerader Schleifscheibe an einem Arm befestigt, der um die Schaufelspitzen kreist. Dabei sind ein automatischer Vorschub in zwei Richtungen sowie eine manuelle Zustellung realisiert.

Ferner ist es bekannt, Schaufeln einzeln zu schleifen. Die Schaufeln werden hierzu einzeln in eine Schleifvorrichtung eingespannt, die einen pneumatischen Schnellläufer mit gerader Schleifscheibe trägt. Der Schnellläufer pendelt um die Schaufelspitze und hat neben der Pendelbewegung einen automatischen Vorschub und eine manuelle Zustellung.

Eine weitere Alternative besteht darin, die Schaufelspitzen zwecks Kürzung zu fräsen. Bei den hierbei verwendeten CNC-Fräsmaschinen werden die Schaufeln einzeln eingespannt und auf die geforderte Länge gefräst.

Ein Nachteil der zum Kürzen von Laufschaufeln eingesetzten Schleifvorrichtungen mit gerader Schleifscheibe besteht darin, dass aufgrund der geringen Breite der Schleifscheibe, die im mobilen Einsatz bei etwa 20 mm liegt, ein Verfahren der Schleifscheibe entlang der Kontur der Schaufelspitze zwingend ist. Entsprechend ist ein automatischer Vorschub erforderlich, was zu einem komplexen Aufbau der Schleifvorrichtung ebenso wie zu hohen Kosten führt. Darüber hinaus geht mit dem automatischen Vorschub eine lange Bearbeitungsdauer einher.

Ein Nachteil der zum Kürzen von Laufschaufeln einer Strömungsmaschine eingesetzten Fräsverfahren ist zum einen darin zu sehen, dass diese sehr teuer sind, was nicht zuletzt auf die hohen Anschaffungskosten der verwendeten CNC-Fräsmaschinen und die hohen Werkzeugkosten zurückzuführen ist. Zum anderen sind die Fräsverfahren sehr langsam. So werden in der Praxis beispielsweise 12 Schichten á 10 Stunden für die Bearbeitung von vier Turbinenstufen benötigt, um nur ein Beispiel zu nennen.

Ausgehend von diesem Stand der Technik ist es eine Aufgabe der vorliegenden Erfindung, ein Verfahren zum Kürzen einer Laufschaufel einer Strömungsmaschine der eingangs genannten Art sowie Vorrichtungen zur Durchführung eines solchen Verfahrens zu schaffen, das bzw. die ein preiswertes und wenig zeitintensives Kürzen von Laufschaufeln ermöglichen.

Zur Lösung dieser Aufgabe schafft die vorliegende Erfindung ein Verfahren zum Kürzen der Laufschaufeln einer Strömungsmaschine durch Materialabtrag an der Schaufelspitze, bei dem erfindungsgemäß zum Kürzen der Laufschaufel eine Bandschleifvorrichtung eingesetzt wird. Ein wesentlicher Vorteil des Einsatzes einer Bandschleifvorrichtung besteht darin, dass unter Verwendung eines Schleifbandes, das breiter als die zu kürzende Schaufelspitze ist, die gesamte Schaufelspitze in einem Arbeitsgang bearbeitet werden kann. Entsprechend ist im Gegensatz zur Schleifbearbeitung mit Schleifscheibe und zur Fräsbearbeitung kein Verfahren des Schleifbandes entlang der Kontur der Schaufelspitze nötig, was zu einer kompakten, leichten und preiswerten Bauweise führt. Darüber hinaus wird die Bearbeitungszeit verkürzt. Gemäß ersten Hochrechnungen der Anmelderin ist gegenüber einem Schleifen mit gerader Schleifscheibe eine Zeitersparnis von etwa 60 % und gegenüber einer Fräsbearbeitung sogar eine Zeitersparnis von 80 bis 90 % möglich. Die höheren Kosten für die Schleifbänder gegenüber einer geraden Schleifscheibe werden durch deutlich verkürzte Bearbeitungszeiten kompensiert. Gleiches gilt für die kürzeren Standzeiten von Schleifbändern gegenüber Schleifscheiben und Fräsern. Ein weiterer Vorteil des Einsatzes einer Bandschleifvorrichtung ist darin zu sehen, dass Schleifbänder nicht so anfällig für Transportschäden sind wie gerade Schleifscheiben oder Fräser. Darüber hinaus haben Versuche gezeigt, dass unter Verwendung einer Bandschleifvorrichtung ein Abplatzen der keramischen Beschichtung der Schaufeln nicht zu befürchten ist. Ferner werden bei der Schleifbearbeitung mit einem Schleifband keine oder nur geringe Grate erzeugt, was den Vorteil hat, dass keine bzw. nur geringere manuelle Nachbearbeitungen durchgeführt werden müssen. Noch ein weiterer Vorteil besteht darin, dass mit der verkürzten Bearbeitungszeit auch eine verkürzte Gefährdungszeit des Personals einhergeht.

Gemäß einer ersten Ausgestaltung des erfindungsgemäßen Verfahrens bleiben die Laufschaufeln während des Kürzens innerhalb eines Gehäuses der Strömungsmaschine eingebaut, wobei das Verfahren die Schritte aufweist: Entfernen eines Gehäuseteils unter zumindest teilweiser Freilegung der zu bearbeitenden Laufschaufeln sowie einer Teilfuge des Gehäuses; Befestigung einer Bandschleifvorrichtung an der Teilfuge des Gehäuses im Bereich der zu bearbeitenden Laufschaufeln; Ausrichten der Bandschleifvorrichtung relativ zu den zu kürzenden Laufschaufeln und Kürzen der Laufschaufeln in situ unter Verwendung der Bandschleifvorrichtung, während der Läufer kontinuierlich gedreht und der während der Schleifbearbeitung entstehende Schleifstaub abgesaugt wird. Diese Verfahrensvariante zeichnet sich insbesondere dadurch aus, dass die Laufschaufeln nicht ausgebaut werden müssen, was mit wenig Aufwand, einer erheblichen Zeitersparnis und geringen Kosten einhergeht. Darüber hinaus werden durch die Bearbeitung der Schaufeln im eingebauten Zustand sämtliche Toleranzketten zur Erstellung eines ordnungsgemäßen Schaufelspaltes automatisch berücksichtigt, was zu einem optimalen Bearbeitungsergebnis führt.

Bevorzugt werden Kühlluftbohrungen der zu kürzenden Schaufeln vor der Durchführung der Schleifbearbeitung abgedichtet oder abgedeckt. Die Abdichtung kann beispielsweise unter Verwendung von Wachs erfolgen. Wachs zeichnet sich insbesondere dadurch aus, dass es einen geringen Schmelzpunkt aufweist und beim Anfahren der Turbine automatisch verdampft und damit entfernt wird. Alternativ können die Kühlluftbohrungen aber auch abgedichtet werden, beispielsweise unter Verwendung einer geeigneten Klebefolie oder dergleichen.

Zum kontinuierlichen Drehen des Läufers wird bevorzugt eine Rotorhilfsdreheinrichtung eingesetzt, die im Stand der Technik grundsätzlich bekannt ist und daher vorliegend nicht näher erläutert werden muss.

Eine weitere Variante des erfindungsgemäßen Verfahrens weist die Schritte auf: Ausbau einer zu kürzenden Laufschaufel aus der Strömungsmaschine; Befestigen der Laufschaufel an einer zur Aufnahme der Laufschaufel ausgelegten Schnellwechseleinrichtung einer Bandschleifvorrichtung; Ausrichten eines Schleifbandes der Bandschleifvorrichtung relativ zu der Laufschaufel und Kürzen der Laufschaufel unter Verwendung der Bandschleifvorrichtung, während die Schnellwechseleinrichtung zusammen mit der an dieser befestigten Laufschaufel um eine Schwenkachse verschwenkt wird. Mit dieser erfindungsgemäßen Verfahrensvariante werden also Laufschaufeln einzeln im demontierten Zustand bearbeitet.

Eine weitere Variante des erfindungsgemäßen Verfahrens weist die Schritte auf: Befestigung der Laufschaufeln an einer Dummy-Radscheibe, hierbei wird jede Laufschaufel sowohl radial als auch axial mittels Gewindebolzen in der Nut fixiert; Anordnen der Dummy-Radscheibe mit den daran gehaltenen Laufschaufeln an einer Dreheinrichtung, die zum Drehen der Dummy-Radscheibe um ihre Drehachse ausgelegt ist; Ausrichten der Bandschleifvorrichtung relativ zu den zu kürzenden Laufschaufeln und Kürzen der Laufschaufeln unter Verwendung der Bandschleifvorrichtung, während die Dummy-Radscheibe kontinuierlich gedreht wird.

Eine weitere Variante des erfindungsgemäßen Verfahrens weist die Schritte auf: Aufspannen des beschaufelten Läufers in einer Drehmaschine entsprechend dem Vorgehen im Läuferneubau-Schleifen; Einbringen von Blechstreifen in den Spalt zwischen Schaufelfuß und Nutgrund, um ein Wackeln der Schaufeln zu vermeiden und diese wie im Betrieb nach außen zu drücken; Ausrichten eines Schleifbandes der Bandschleifvorrichtung relativ zu den Laufschaufeln einer Schaufelreihe und Kürzen der Laufschaufel unter Verwendung der Bandschleifvorrichtung, während der Läufer in der Drehmaschine mit niedriger Drehzahl rotiert. Der Unterschied dieser erfindungsgemäßen Verfahrensvariante zum bisher eingesetzten Verfahren des Läuferneubau-Schleifens besteht in der Verwendung eines Bandschleifers anstelle der bisher eingesetzten geraden Schleifscheibe.

Bevorzugt wird während der Schleifbearbeitung entstehender Schleifstaub abgesaugt, um eine Verschmutzung der Umgebung zu vermeiden und den Bediener vor gegebenenfalls giftigen oder zumindest ungesunden Stäuben zu schützen.

Vorteilhaft werden Kühlluftbohrungen der zu kürzenden Laufschaufel vor der Durchführung der Schleifbearbeitung abgedichtet oder abgedeckt, wie es zuvor bereits geschrieben wurde.

Zur Lösung der eingangs genannten Aufgabe schafft die vorliegende Erfindung ferner eine Bandschleifvorrichtung zur Durchführung der ersten erfindungsgemäßen Verfahrensvariante, umfassend einen Motor, zumindest ein vom Motor angetriebenes Schleifband, eine Vorschub-/Zustelleinrichtung, die zur Realisierung der Vorschub- und Zustellbewegung des Schleifbandes ausgelegt ist, eine Ausrichteinrichtung, die zum relativen Ausrichten des Schleifbandes und der zu kürzenden Laufschaufeln ausgelegt ist, eine Absaugeinrichtung und eine Befestigungseinrichtung, die zur Befestigung einer Bandschleifvorrichtung an einer Teilfuge eines Gehäuses einer Strömungsmaschine ausgelegt ist. Eine solche Schleifbandvorrichtung zeichnet sich insbesondere dadurch aus, dass sie direkt am Gehäuse einer Strömungsmaschine befestigt werden und Laufschaufeln in situ bearbeiten kann.

Als Vorschub-/Zustelleinrichtung kann beispielsweise eine Gewindespindel mit Trapezgewinde gewählt werden. Alternativ sind auch Kugelumlaufspindeln, andere Gewindearten, Zahnstangen oder dergleichen möglich. Zur Führung können diverse Linearführungen eingesetzt werden, wie beispielsweise Schwalbenschwanzführungen, wälzgelagerte Linearführungen oder pneumatisch/hydraulisch betätigte Zylinder. Die Messung der Zustellung kann über eine Skala am Handrad realisiert werden. Auch eine Messuhr ist denkbar. Alternativ kann ein berührungsloses Messsystem installiert werden, welches immer den realen Abstand zur Schaufel misst. Als Notlösung können der Läufer und die Bandschleifvorrichtung aber auch angehalten werden, woraufhin der Spalt mittels einer Fühlerlehre manuell nachgemessen werden kann.

Als Ausrichteinrichtung kann beispielsweise eine drehbare Platte verwendet werden, die von Hand gedreht wird. Auch ein Schneckenradgetriebe ist denkbar. Alternativ kann die Ausrichteinrichtung aber auch integral mit der Befestigungseinrichtung ausgebildet sein, indem die Befestigungseinrichtung derart ausgestaltet ist, dass die Bandschleifvorrichtung an der Teilfuge des Gehäuses zwecks Ausrichten in verschiedenen Positionen befestigt bzw. justiert werden kann. Die Messung kann auch hier über ein berührungsloses Messsystem erfolgen. Alternativ kann auch manuell angekratzt und anschließend der Spalt mit einer Fühlerlehre gemessen werden.

Die Absaugeinrichtung sollte einen geeigneten Filter beinhalten, um die Belastung mit karzinogenen Schleifstäuben zu minimieren und Staubexplosionen sicher zu verhindern. Darüber hinaus sollte sie stark genug sein, die Kühlbohrungen der Schaufeln frei von Stäuben zu halten. Zusätzlich kann das Schleifband auch großteils mit einer Abdeckung versehen werden, welche die Absaugeinrichtung geeignet unterstützt. Zum Schutz der Schaufeln können Bürsten oder Prallplatten verwendet werden, die den Staub im gewünschten Bearbeitungsbereich halten.

Als Befestigungseinrichtung können Magnetspannplatten (mechanisch betätigt, elektrisch entmagnetisiert) zur Anwendung kommen. Auch denkbar wären mehrere kleine Magnetfüße (elektrisch entmagnetisierbar) oder Klemmstücke, die mit an der Teilfuge ausgebildeten Gewindebohrungen verschraubt werden.

Ferner schafft die vorliegende Erfindung eine Bandschleifvorrichtung zur Durchführung der zweiten erfindungsgemäßen Verfahrensvariante, bei der die Laufschaufel im ausgebauten Zustand bearbeitet wird. Diese Bandschleifvorrichtung umfasst ein Gestell, einen Motor, zumindest ein vom Motor angetriebenes Schleifband, eine Vorschub-/ Zustelleinrichtung, die zur Realisierung der Vorschub- und Zustellbewegung des Schleifbandes ausgelegt ist, eine Ausrichteinrichtung, die zum relativen Ausrichten des Schleifbandes und einer zu kürzenden Laufschaufel ausgelegt ist, und eine zur Aufnahme der Laufschaufel ausgelegte Schnellwechseleinrichtung, die an einem am Gestell schwenkbar gehaltenen Schwenkarm befestigt ist.

Auch diese Bandschleifvorrichtung umfasst bevorzugt eine Absaugeinrichtung.

Die Vorschub-/Zustelleinrichtung, die Ausrichteinrichtung und die Absaugeinrichtung können analog zur ersten erfindungsgemäßen Variante der erfindungsgemäßen Bandschleifvorrichtung ausgebildet sein.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist:
Figur 1 eine schematische Rückansicht einer Bandschleifvorrichtung gemäß einer ersten Ausführungsform der vorliegenden Erfindung;
Figur 2 eine schematische Seitenansicht der in Figur 1 dargestellten Bandschleifvorrichtung;
Figur 3 eine schematische Schnittansicht, welche die in den Figuren 1 und 2 dargestellte Bandschleifvorrichtung im bestimmungsgemäßen Zustand während des Kürzens einer Laufschaufel einer Strömungsmaschine zeigt; und
Figur 4 eine schematische perspektivische Ansicht einer Bandschleifvorrichtung gemäß einer zweiten Ausführungsform der vorliegenden Erfindung.

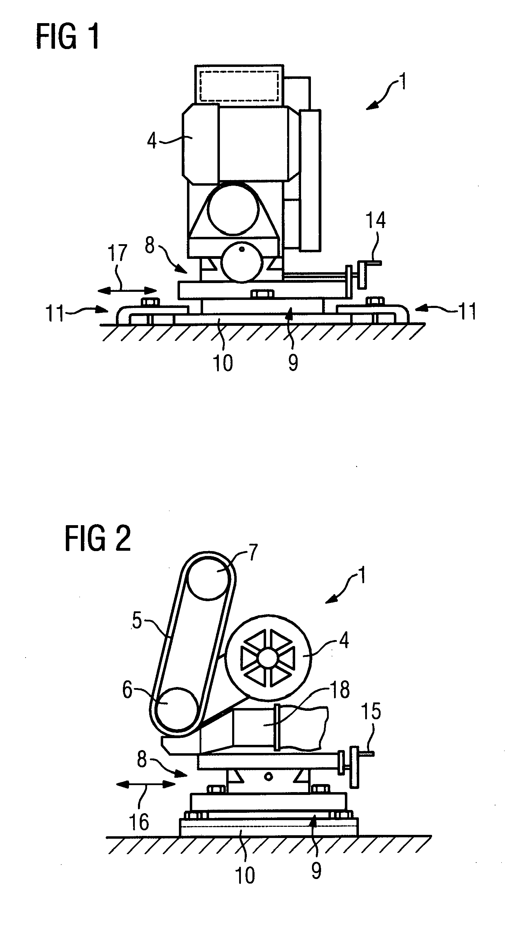

Die Figuren 1 und 2 zeigen eine Bandschleifvorrichtung gemäß einer ersten Ausführungsform der vorliegenden Erfindung, die zum Kürzen einer Laufschaufel 2 einer Strömungsmaschine 3 durch Materialabtrag einer Schaufelspitze dient, wie es nachfolgend noch näher erläutert wird.

Die Bandschleifvorrichtung 1 umfasst einen Motor 4, ein vom Motor 4 angetriebenes Schleifband 5, das um eine Kontaktrolle 6 und eine Spannrolle 7 gelegt und zwischen diesen gespannt ist, eine Vorschub-/Zustelleinrichtung 8 und eine Ausrichteinrichtung 9, wobei die zuvor genannten Komponenten auf einer Basisplatte 10 angeordnet sind. Ferner umfasst die Bandschleifvorrichtung 1 eine Befestigungseinrichtung 11, mit der die Basisplatte 10 an einer Teilfuge 12 einer unteren Gehäusehälfte 13 der Strömungsmaschine 3 befestigbar ist.

Die Vorschub-/Zustelleinrichtung 8 ist zur Realisierung der Vorschub- und Zustellbewegung des Schleifbandes 5 ausgelegt und wird vorliegend durch einen Kreuztisch 14 gebildet. Mit Hilfe der Vorschub-/Zustelleinrichtung 8 kann das Schleifband 5 durch Betätigen entsprechender Handräder 14 und 15 in zueinander senkrechten Richtungen bewegt werden, wie es durch die Doppelpfeile 16 und 17 angedeutet ist.

Die Ausrichteinrichtung 9 wird vorliegend durch eine drehbar gelagerte Platte gebildet, die von Hand gedreht und in beliebigen Drehpositionen festgelegt werden kann.

Die Vorschub-/Zustelleinrichtung 8 und/oder die Ausrichteinrichtung 9 kann/können mit einem berührungslosen Messsystem versehen sein, um den Abstand zu dem zu bearbeitenden Werkstück zu messen und auf diese Weise die Einstellung des Vorschubs bzw. der Zustellung und/oder die Ausrichtung des Schleifbandes 5 zum Werkstück zu unterstützen.

Die Befestigungseinrichtung 11 wird vorliegend durch Klemmstücke gebildet, die über Befestigungsschrauben und an der Teilfuge 12 der unteren Gehäusehälfte 13 vorhandene Gewindebohrungen an der Teilfuge 12 befestigt werden können.

Ferner umfasst die Bandschleifvorrichtung 1 eine Absaugeinrichtung 18, die vorliegend als separate Einheit vorgesehen ist. Alternativ kann diese aber auch integral mit der Bandschleifvorrichtung 1 ausgebildet sein. Die Absaugeinrichtung 18 umfasst einen nicht näher dargestellten Filter und dient zur Abscheidung karzinogener Stäube und Vermeidung von Staubexplosionen. Ferner umfasst die Absaugeinrichtung 18 ein nicht näher dargestelltes Sauggebläse, das stark genug ist, um den während einer Schleifbearbeitung entstehenden Schleifstaub vollständig oder zumindest nahezu vollständig abzusaugen.

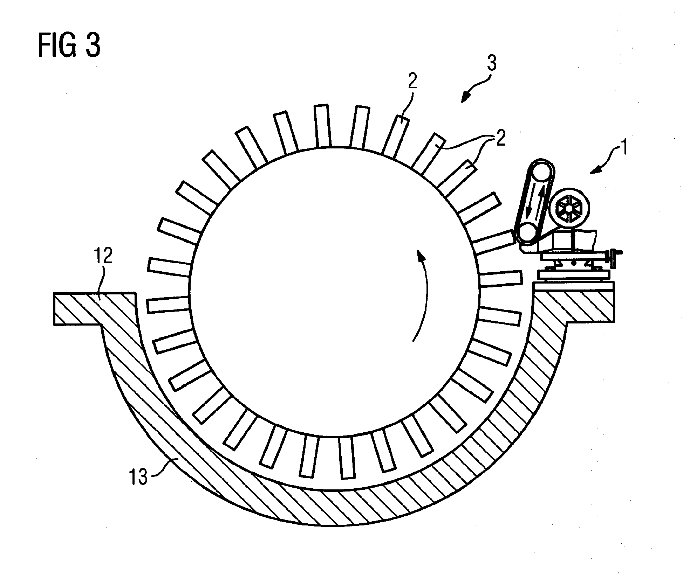

Zum Kürzen von Laufschaufeln einer Strömungsmaschine 3 im eingebauten Zustand wird, wie es in Figur 3 dargestellt ist, in einem ersten Schritt die obere Gehäusehälfte (nicht gezeigt) unter zumindest teilweiser Freilegung der zu bearbeitenden Laufschaufeln 2 sowie der Teilfuge 12 von der unteren Gehäusehälfte 13 abgehoben und entfernt. Daraufhin wird die Bandschleifvorrichtung 1 an der Teilfuge 12 der unteren Gehäusehälfte 13 im Bereich der zu bearbeitenden Laufschaufel 2 unter Einsatz der Befestigungseinrichtung 11 befestigt. In einem weiteren Schritt wird die Bandschleifvorrichtung 1 relativ zu den zu kürzenden Laufschaufel 2 ausgerichtet, indem die drehbar gelagerte Platte der Ausrichteinrichtung 9 gedreht und anschließend die Drehposition nach Erreichen der gewünschten Ausrichtung festgelegt wird. Nunmehr kann die Laufschaufel 2 in situ unter Verwendung der Bandschleifvorrichtung 1 bei entsprechender Betätigung der Vorschub-/Zustelleinrichtung 8 gekürzt werden, während der Läufer mit Hilfe einer nicht näher dargestellten Rotorhilfsdreheinrichtung kontinuierlich gedreht und der während der Schleifbearbeitung entstehende Schleifstaub unter Verwendung der Absaugeinrichtung 18 abgesaugt wird. Die Breite des Schleifbandes 5 ist breiter als die Breite der Schaufelspitze gewählt, so dass zur Kürzung der Laufschaufel 2 kein Verfahren des Schleifbandes 5 entlang der Kontur der Schaufelspitze erforderlich ist. Um zu verhindern, dass der Schleifstaub den Bearbeitungsbereich verlässt, können optional Bürsten oder Prallplatten verwendet werden, die den Staub im gewünschten Bereich halten, auch wenn dies vorliegend nicht näher dargestellt ist.

Wenn zu befürchten ist, dass die Absaugeinrichtung 18 ein Verstopfen der Kühlluftbohrungen der zu kürzenden Laufschaufeln 2 mit Schleifstaub nicht verhindern kann, können die Kühlluftbohrungen der zu kürzenden Laufschaufeln 2 vor der Durchführung der Schleifbearbeitung abgedichtet oder abgedeckt werden. Die Abdichtung kann beispielsweise unter Verwendung von Wachs erfolgen. Zur Abdeckung kann beispielsweise einer Klebefolie oder dergleichen eingesetzt werden.

Bei einem weiteren Verfahren gemäß einer Ausführungsform der vorliegenden Erfindung können zu kürzende Laufschaufeln 2 bei der Neuherstellung oder im Rahmen einer Überarbeitung auch an einer Dummy-Radscheibe befestigt werden, die dann auf einer Dreheinrichtung montiert wird. Die Dreheinrichtung ist dabei derart ausgelegt, dass sie die Dummy-Radscheibe um ihre Drehachse kontinuierlich dreht. Eine Bandschleifvorrichtung, wie beispielsweise eine an einem Gestell angeordnete Bandschleifvorrichtung 1, wie sie in den Figuren 1 und 2 dargestellt ist, kann daraufhin zu den zu kürzenden Laufschaufeln 2 ausgerichtet werden, woraufhin die Kürzung der Laufschaufeln 2 bei sich kontinuierlich drehender Dummy-Radscheibe erfolgt. Auch bei dieser Variante des erfindungsgemäßen Verfahrens wird der während der Schleifbearbeitung entstehende Schleifstaub bevorzugt unter Verwendung einer entsprechenden Absaugeinrichtung abgesaugt. Zusätzlich können die Kühlluftbohrungen der zu kürzenden Laufschaufeln auch vor der Durchführung der Schleifbearbeitung abgedichtet oder abgedeckt werden. Alternativ können die Laufschaufeln nach dem Kürzen aber auch einfach gereinigt werden.

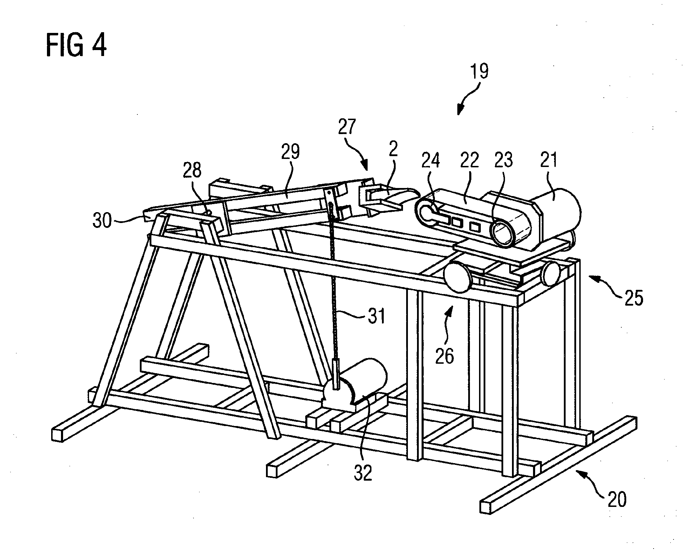

Figur 4 zeigt eine Bandschleifvorrichtung 19 gemäß einer weiteren Ausführungsform der vorliegenden Erfindung, die zum Kürzen einer Leitschaufel 2 im ausgebauten Zustand durch Materialabtrag an der Schaufelspitze dient. Die Bandschleifvorrichtung 1 umfasst ein Gestell 20, einen Motor 21, ein vom Motor 21 angetriebenes Schleifband 22, das mit um eine Kontaktrolle 23 und eine Spannrolle 24 gelegt und zwischen diesen gespannt ist, eine Vorschub-/Zustelleinrichtung 25, die zur Realisierung der Vorschub- und Zustellbewegung des Schleifbandes 22 ausgelegt ist, eine Auslegeinrichtung 26, die zum relativen Ausrichten des Schleifbandes 22 und einer zu kürzenden Laufschaufel 2 ausgelegt ist, und eine zur Aufnahme der Laufschaufel 2 ausgelegte Schnellwechseleinrichtung 27, die an einem Gestell 20 schwenkbar um eine Schwenkachse 28 gehaltenen Schwenkarm 29 befestigt ist, der an seinem freien Ende mit einem Gegengewicht 30 versehen ist. Der Schwenkarm 29 ist über eine gelenkig verbundene, längenverstellbare Stange 31 mit einem die Hubbewegung des Schwenkarms 29 realisierenden Antrieb 32 verbunden, der am Gestell 20 montiert ist.

Auch die Bandschleifvorrichtung 19 kann mit einer Absaugeinrichtung 18 ausgestattet sein, wenn dies gewünscht ist, auch wenn eine solche Absaugeinrichtung 18 in Figur 4 nicht dargestellt ist.

Die Vorschub-/Zustelleinrichtung 25, die Ausrichteinrichtung 26 und die Absaugeinrichtung 18 können analog zu den entsprechenden Komponenten der in den Figuren 1 bis 3 dargestellten Bandschleifvorrichtung 1 ausgebildet sein, weshalb an dieser Stelle auf eine erneute Beschreibung verzichtet wird.

Zum Kürzen einer Leitschaufel 2 wird diese in einem ersten Schritt aus der Strömungsmaschine 3 ausgebaut. Anschließend wird die Laufschaufel 2 an der Schnellwechseleinrichtung 27 der Bandschleifvorrichtung 19 befestigt. In einem weiteren Schritt wird das Schleifband 22 unter Verwendung der Ausrichteinrichtung 26 relativ zu der Laufschaufel 2 ausgerichtet. Daraufhin wird die Laufschaufel 2 unter Verwendung der Bandschleifvorrichtung 19 gekürzt, während die Schnellwechseleinrichtung 27 zusammen mit der an dieser befestigten Laufschaufel 2 unter Verwendung des Antriebs 32 um die Schwenkachse 28 geschwenkt wird. Die während der Schleifbearbeitung entstehenden Schleifpartikel können über die Absaugeinrichtung abgesaugt werden, wenn eine solche vorgesehen ist.

Auch bei dieser erfindungsgemäßen Variante können die Kühlluftbohrungen der zu kürzenden Laufschaufel 2 vor der Durchführung der Schleifbearbeitung abgedichtet oder abgedeckt werden, wie es zuvor bereits unter Bezugnahme auf die erste Verfahrensvariante beschrieben wurde. Es kann aber auch Sperrluft eingesetzt werden, welche vom Inneren der Schaufel durch die Kühlluftbohrungen strömt und so ein Verstoßen der Bohrungen verhindert. Alternativ oder zusätzlich kann die Laufschaufel 2 nach ihrer Bearbeitung einfach gereinigt werden.

Ein wesentlicher Vorteil der erfindungsgemäßen Bandschleifvorrichtungen 1 und 19 sowie der mit diesen durchgeführten Verfahren zum Kürzen von Laufschaufeln einer Strömungsmaschine durch Materialabtrag an der Schaufelspitze besteht darin, dass unter Verwendung eines Schleifbandes, das breiter als die zu kürzende Schaufelspitze ist, die gesamte Schaufelspitze in einem Arbeitsgang bearbeitet werden kann. Entsprechend ist im Gegensatz zur Schleifbearbeitung mit einer Schleifscheibe und zur Fräsbearbeitung kein Verfahren des Schleifbandes entlang der Kontur der Schaufelspitze nötig, was zu einer kompakten, leichten und preiswerten Bauweise führt. Darüber hinaus wird die Bearbeitungszeit entscheidend verkürzt. Ein weiterer Vorteil des Einsatzes einer Bandschleifvorrichtung ist darin zu sehen, dass Schleifbänder nicht so anfällig für Transportschäden sind wie gerade Schleifscheiben oder Fräser. Darüber hinaus haben Versuche gezeigt, dass unter Verwendung einer Bandschleifvorrichtung ein Abplatzen der keramischen Beschichtung der Schaufeln nicht zu befürchten ist. Ferner werden bei der Schleifbearbeitung mit einem Schleifband keine oder nur geringe Grate erzeugt, was den Vorteil hat, dass keine bzw. nur geringere manuelle Nachbearbeitungen durchgeführt werden müssen. Noch ein weiterer Vorteil besteht darin, dass mit der verkürzten Bearbeitungszeit auch eine verkürzte Gefährdungszeit des Personals einhergeht.

## Patentansprüche

1. Bandschleifvorrichtung (19) zur Durchführung eines Verfahrens,
umfassend ein Gestell (20), einen Motor (21), zumindest ein vom Motor (21) angetriebenes Schleifband (22), eine Vorschub-/Zustelleinrichtung (25), die zur Realisierung der Vorschub- und Zustellbewegung des Schleifbandes (22) ausgelegt ist, eine Ausrichteinrichtung (26), die zum relativen Ausrichten des Schleifbandes (22) und einer zu kürzenden Laufschaufel (2) ausgelegt ist, und eine zur Aufnahme der Laufschaufel (2) ausgelegte Schnellwechseleinrichtung (27),
**dadurch gekennzeichnet, dass**
die Schnellwechseleinrichtung (27) an einem am Gestell (20) schwenkbar gehaltenen Schwenkarm (29) befestigt ist.

2. Bandschleifvorrichtung (19) nach Anspruch 1,
**dadurch gekennzeichnet, dass**
diese eine Absaugeinrichtung (18) aufweist.
